(19) Europäisches Patentamt
European Patent Office
Office européen des brevets

(11) **EP 3 374 224 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **16797791.7**

(22) Anmeldetag: **08.11.2016**

(51) Int Cl.:
**B60K 28/16** *(2006.01)* **B60W 50/06** *(2006.01)*
**B60W 50/00** *(2006.01)*

(86) Internationale Anmeldenummer:
**PCT/EP2016/076960**

(87) Internationale Veröffentlichungsnummer:
**WO 2017/080993 (18.05.2017 Gazette 2017/20)**

(54) **FAHRDYNAMIKREGELSYSTEM IN EINEM KRAFTFAHRZEUG UND ELEKTRONISCHE FAHRDYNAMIKSTEUEREINHEIT FÜR EIN FAHRDYNAMIKREGELSYSTEM**

DRIVE DYNAMIC REGULATING SYSTEM IN A MOTOR VEHICLE, AND ELECTRONIC DRIVE DYNAMIC CONTROL UNIT FOR A DRIVE DYNAMIC REGULATING SYSTEM

SYSTÈME DE RÉGULATION DE LA DYNAMIQUE DE CONDUITE DANS UN VÉHICULE AUTOMOBILE ET UNITÉ DE COMMANDE ÉLECTRONIQUE DE LA DYNAMIQUE DE CONDUITE POUR UN SYSTÈME DE RÉGULATION DE LA DYNAMIQUE DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2015 DE 102015222059**

(43) Veröffentlichungstag der Anmeldung:
**19.09.2018 Patentblatt 2018/38**

(73) Patentinhaber: **Bayerische Motoren Werke Aktiengesellschaft**
**80809 München (DE)**

(72) Erfinder:
• **BAIER, Andreas**
**83026 Rosenheim (DE)**
• **EBERL, Thomas**
**82054 Sauerlach (DE)**
• **ESPENHAIN, Marc**
**80807 München (DE)**
• **MÜLLER, Torsten**
**80538 München (DE)**

(56) Entgegenhaltungen:
DE-A1-102006 007 740    DE-A1-102009 020 794
DE-A1-102010 014 971    DE-A1-102011 078 271
DE-B3-102011 079 668

**Beschreibung**

Die vorliegende Erfindung betrifft eine Fahrdynamiksteuerung oder -regelung sowie eine Steuer- oder Regelungsvorrichtung insbesondere in Form von elektronischen Steuereinheiten mit entsprechend programmierten Funktionsmodulen für ein Kraftfahrzeug zur Durchführung einer Fahrdynamiksteuerung oder -regelung. Im Folgenden wird zur Vereinfachung der Begriff Steuerung für eine Steuerung und für eine Regelung verwendet.

Zum technischen Hintergrund wird insbesondere auf die DE 10 2006 007 740 A1 und die DE 10 2010 014 971 A1 hingewiesen.

Bekannt sind zahlreiche Vorrichtungen und Verfahren für Traktions-, Antriebsschlupf- und/oder Bremsschlupfsteuersysteme, die allein oder in Verbindung mit übergeordneten Fahrstabilitätssystemen die Brems- und Traktionsleistung sowie die Fahrstabilität bzw. die Fahrdynamik unter verschiedensten Fahrverhältnissen verbessern. Diese Systeme basieren hardwareseitig z. B. auf elektromechanisch-hydraulischer, elektromechanisch-pneumatischer oder rein elektromechanischer Aktuatorik in Verbindung mit einer elektronischen Steuer- bzw. Regeleinheit und mit zugeordneter diverser Sensorik. Ferner weisen die bekannten Systeme konventionelle Schnittstellen und/oder Busanbindungen zu Betätigungs- und Schaltelementen sowie weiteren Steuer- bzw. Regelsystemen und Anzeigeeinheiten im Fahrzeugsystemverbund auf.

Übliche Fahrdynamiksteuersysteme steuern im Wesentlichen z. B. schlupf-, kraftschluss-, reibwert-, querbeschleunigungs-, längsbeschleunigungs-, längsneigungs-, querneigungs-, gierwinkel- und/oder schwimmwinkelabhängig (allgemein also fahrzustandsabhängig) einerseits das Antriebsmoment mindestens eines Antriebsmotors (Verbrennungsmotor und/oder E-Maschine) sowie andererseits auch durch individuelle Bremseingriffe die Radbremsmomente. Bei Fahrzeugen mit Verbrennungsmotor wird üblicherweise das Antriebsmoment über Füllungs-, Zündwinkel- und/oder Einspritzausblendungseingriffe gesteuert.

Bei Stabilitäts- und Traktionssystemen heutiger Prägung werden die auszuregelnden Regelabweichungen auf Basis der Differenz eines Sollschlupfes von einem Istschlupf oder einer Solldrehzahl von einer Istdrehzahl ermittelt. Ein Sollschlupf kann beispielsweise einzelrad- oder achsbezogen sein. Der Istschlupf wird meist auf Basis einer Einzelraddrehzahl oder einer Achsdrehzahl (= Mittelwert der Raddrehzahlen einer Achse) im Vergleich mit einer Referenzdrehzahl bzw. Referenzgeschwindigkeit ermittelt, die aus der tatsächlichen Fahrzeuglängsgeschwindigkeit ($v_x$) über Grund hergeleitet wird. Diese tatsächliche Fahrzeuglängsgeschwindigkeit kann beispielsweise direkt gemessen werden oder eine Modellgröße sein, die aus einer Sensorfusion unterschiedlicher Sensoren (z.B. Raddrehzahlfühler, Längsbeschleunigung, etc.) gebildet wird.

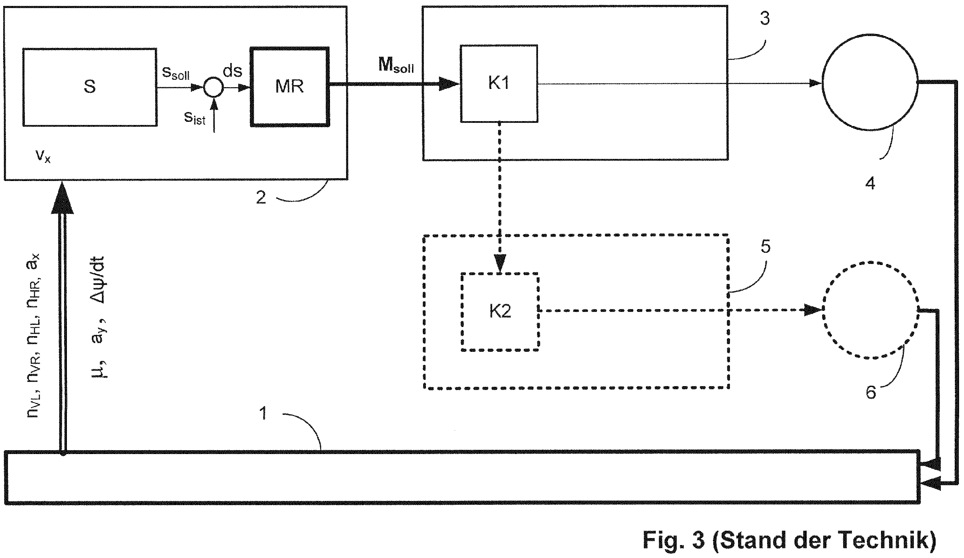

In Fig. 3 ist ein Beispiel für ein bekanntes Verfahren zur Fahrdynamiksteuerung dargestellt. Hierbei wird in einer Steuereinheit 2 zur Fahrdynamiksteuerung in einem Kraftfahrzeug 1 aus der Fahrzeuglängsgeschwindigkeit $v_x$ und den ermittelten Raddrehzahlen $n_{VL}$, $n_{VR}$, $n_{HL}$ und $n_{HR}$ ein Istschlupf sist ermittelt. In einem Sollwertgenerierungs-Modul S wird insbesondere aus der Querbeschleunigung $a_y$, dem Reibwert $\mu$, der Gierabweichung $\Delta\psi/dt$ (Sensorgierrate-Modellgierrate) und der Fahrzeuglängsgeschwindigkeit $v_x$ ein Sollschlupf $s_{soll}$ vorgegeben. Zum Ausregeln der Schlupfabweichung ds wird in einem Regel-Modul MR ein Soll-Moment $M_{soll}$ ermittelt und zumindest einer elektronischen Antriebssteuereinheit 3 zur Steuerung eines Verbrennungsmotors 4 und/oder einer elektronischen Antriebssteuereinheit 5 zur Steuerung einer E-Maschine als Sollwert weitergeleitet. Durch in den elektronischen Antriebssteuereinheiten 3 und 5 vorgesehene Koordinationsmodule K1 und K2 beispielsweise in Form einer sogenannten Momentenstruktur wird dieses Soll-Moment $M_{soll}$ in Steuersignale zur entsprechenden Ansteuerung der Aktuatoren der Antriebseinheiten 4 und/oder 6 umgesetzt.

Die technischen Gegenstände der DE 10 2010 061 918 A1 und der DE 10 2004 057 834 A1 sind Beispiele für Fahrdynamikregelsysteme nach dem oben beschriebenen Stand der Technik, also insbesondere Steuer- und/oder Regelsysteme für zweispurige und zweiachsige Kraftfahrzeuge, wobei über ein Fahrstabilitäts-, Brems-, Traktions- oder Antriebsschlupf-Regelsystem (wie z.B. DSC oder DXC in den Fahrzeugen der Anmelderin, ESP, Mittenkupplung oder ASC) eine aktive Beeinflussung des Antriebsmoments (Motormoments) und/oder gegebenenfalls zusätzlich oder alternativ radselektive Bremseneingriffe an angetriebenen und nicht angetriebenen Rädern bei Auftreten eines vorgegebenen Radschlupfes oder bei Auftreten einer definierten Fahrzeuginstabilität vorgenommen werden können. Dabei wird Radschlupf normalerweise dann erkannt, wenn eine oder mehrere vorgegebene Sollschlupfschwellen überschritten werden und somit eine Regelabweichung auftritt.

Es ist Aufgabe der Erfindung, ein Verfahren und eine Vorrichtung zur Fahrdynamiksteuerung im Hinblick auf ihre Reaktionsschnelligkeit zu verbessern.

Die Lösung dieser Aufgabe erfolgt durch die Merkmale des Anspruchs 1. Die abhängigen Ansprüche haben vorteilhafte Weiterbildungen der Erfindung zum Gegenstand.

Das erfindungsgemäße Fahrdynamikregelsystem weist eine elektronische Fahrdynamiksteuereinheit auf, die mit mindestens einer Antriebssteuereinheit verbunden und derart ausgestaltet ist, dass sie zunächst einen Soll-Schlupf oder einen Soll-Schlupf-Korridor und die tatsächliche Fahrzeuggeschwindigkeit als Referenzgeschwindigkeit ermittelt. Dabei wird der Soll-Schlupf-Korridor vorzugsweise durch einen minimal zulässigen Soll-Schlupf für den Schubbetrieb und einen maximal zulässigen Soll-Schlupf für den Zugbetrieb in der jeweils aktuellen Fahrsituation vorgegeben.

Erfindungsgemäss wird direkt der Soll-Schlupf zusammen mit der Referenzfahrzeuggeschwindigkeit an die mindestens eine Antriebssteuereinheit ausgegeben, wobei die Antriebssteuereinheit daraus selbst eine Soll-Drehzahl auf Motorebene ermittelt. Auch hier kann anstelle eines Soll-Schlupfwertes ein Soll-Schlupf-Korridor ausgegeben werden, der von der Antriebssteuereinheit wiederum in einen Soll-Drehzahl-Korridor umgerechnet wird.

Abhängig von den Soll-Werten oder von den Soll-Korridoren daraufhin von der mindestens einen Antriebssteuereinheit bei Bedarf eine Drehzahlregelung vorgenommen. Die Antriebssteuereinheit erfasst naturgemäß ohnehin kontinuierlich die Ist-Drehzahl.

Eine Antriebssteuereinheit kann beispielsweise ein Motorsteuergerät oder ein Getriebesteuergerät sein. Die Drehzahlregelung kann beispielsweise mittels eines entsprechend programmierten Funktionsmoduls im Motorsteuergerät durch die Ansteuerung von Aktuatoren des Motors und/oder mittels eines entsprechend programmierten Funktionsmoduls im Getriebesteuergerät durch Ansteuerung von Aktuatoren in einem (Automatik-) Getriebe durchgeführt werden. In Schaltvorgängen kann das Getriebesteuergerät aktiv auf die Solldrehzahlen regeln und den Schaltvorgang entsprechend anpassen.

Die Ist-Drehzahl des Antriebs wird beispielsweise aus dem Antriebssensor ermittelt (z.B. Kurbelwellensensor oder Rotorlagesensor).

Die Schnittstelle und das Regelprinzip sind in analoger Weise beispielsweise auch übertragbar auf Steuereinheiten von Differenzialen, Mittenkupplungen und Radnabenmotoren, die somit im weiteren Sinne auch unter den Begriff Fahrdynamikregelsysteme fallen. Der Erfindung liegen folgende Erkenntnisse zugrunde: Insbesondere bei Kraftfahrzeugen mit elektrischen Antriebsmotoren (E-Maschinen) aber auch bei modernen hochdynamischen Verbrennungsmotoren mit hoher Leistung stößt die oben beschriebene Vorgabe eines Soll-Moments durch die Steuereinheit zur Fahrdynamiksteuerung an ihre Grenzen. Die Regelgüte ist aufgrund der Komplexität der Regelstrecke und der Latenzzeit in der Schaltungstechnik der Antriebssteuereinheiten unbefriedigend. Um die vergleichsweise langsame Schlupfregelung der Fahrdynamiksteuersysteme mittels Vorgabe eines Soll-Moments zu verbessern, ist ein hoher Aufwand bei der Applikation und bei der Bauteilauslegung wegen der hohen Materialbelastung notwendig. Das hohe Dynamikpotenzial gerade bei E-Maschinen kann nicht ausreichend genutzt werden.

Daher wird erfindungsgemäß der Schlupfregler aus der elektronischen Steuereinheit des Fahrdynamikregelsystems heraus aktornah verlagert, wobei als Aktor die jeweilige Antriebssteuereinheit angesehen wird.

Die Schnittstelle im Bordnetz zur Kommunikation eines Sollwertes von der Fahrdynamiksteuereinheit zur mindestens einen Antriebssteuereinheit wird erfindungsgemäß von einer Momentenschnittstelle in eine Drehzahlschnittstelle oder eine Sollschlupfschnittstelle (einschließlich Übertragung der Referenzgeschwindigkeit bzw. Referenzdrehzahl) geändert. Der Regelbeginn wird in konventionellen Schlupfregelsystemen von der Fahrdynamiksteuereinheit vorgegeben. Hierbei kann aufgrund der Übertragungszeiten zwischen den Steuergeräten ein spürbarer Ruck im Fahrzeug auftreten. Mit Hilfe der Erfindung entscheidet das Antriebssteuergerät selbstständig, wann Regelbedarf entsteht. Der Ruck wird damit vermieden.

Sind zwei unabhängige Antriebsmotoren (wie z. B. bei straßengekoppelten Achs-Hybriden) vorhanden, können rad- oder achsindividuelle Soll-Schlupfwerte bzw. Soll-Schlupf-Korridore einschließlich Referenzgeschwindigkeit vorgegeben werden.

In der Zeichnung ist ein Ausführungsbeispiel der Erfindung dargestellt.

Es zeigt

Fig. 1     schematisch die für das erfindungsgemäße Verfahren wesentlichen Komponenten und ihre Wirkungsweise bei einem Kraftfahrzeug mit Hinterradantrieb und nur einem Antriebsmotor sowie hier beispielhaft mit einer Soll-Schlupfschnittstelle und

Fig. 2     schematisch nicht erfindungsgemässe Komponenten und ihre Wirkungsweise bei einem Kraftfahrzeug mit einem straßengekoppelten Achs-Hybrid-Allradantrieb sowie hier beispielhaft mit einer Soll-Drehzahlschnittstelle.

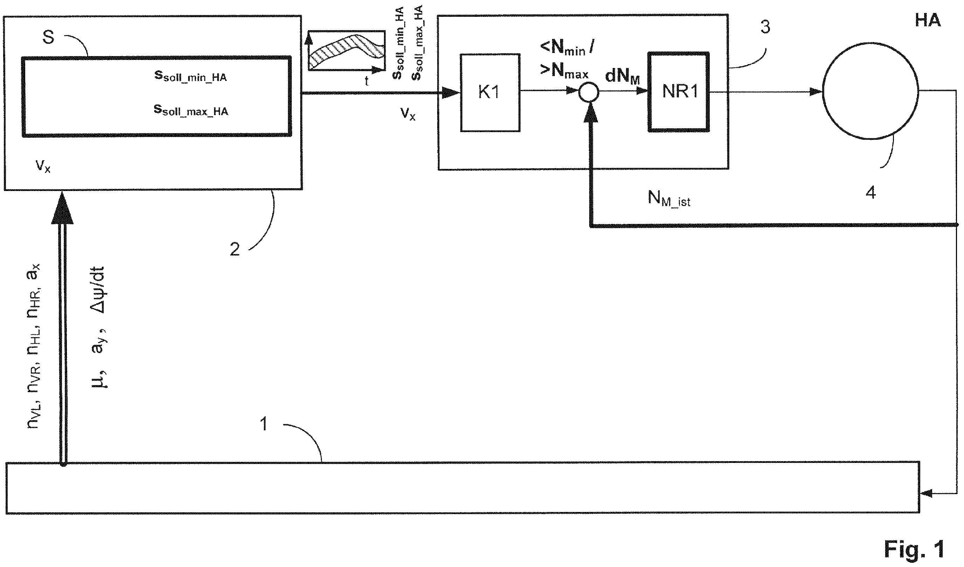

In Fig. 1 ist schematisch ein Fahrdynamikregelsystem für ein Kraftfahrzeug 1 bzw. in einem Kraftfahrzeug 1 mit einer elektronischen Fahrdynamiksteuereinheit 2 dargestellt, die mit einer elektronischen Antriebssteuereinheit 3 verbunden ist. Die elektronische Antriebssteuereinheit 3 ist beispielsweise für die Steuerung eines Verbrennungsmotors 4 zum Antrieb einer Hinterachse HA vorgesehen.

Die Fahrdynamiksteuereinheit 2 ist insbesondere durch entsprechend programmierte Funktionsmodule, beispielsweise durch ein Sollwertgenerierungs-Modul S, derart ausgestaltet, dass zunächst wie beim oben beschriebenen Stand der Technik beispielsweise aus den gemessenen Raddrehzahlen $n_{VL}$, nvR, $n_{HL}$ und $n_{HR}$ sowie aus dem Signal ax eines Längsbeschleunigungssensors die tatsächliche Fahrzeuglängsgeschwindigkeit $v_x$ als Referenzgeschwindigkeit bzw. Referenzdrehzahl ermittelt wird. Weiterhin wird aus der Querbeschleunigung $a_y$, dem Reibwert $\mu$, der Gierabweichung $\Delta\psi_{/dt}$ und der Fahrzeuglängsgeschwindigkeit $v_x$ ein Sollschlupf $s_{soll}$ für die Hinterachse HA ermittelt. Dabei wird vorzugsweise ein minimal zulässiger Sollschlupf $s_{soll\_min}$ für den Schubbetrieb und ein maximal zulässiger Sollschlupf $s_{soll\_max}$ für den Zugbetrieb ermittelt.

Bei diesem Ausführungsbeispiel wird also ein Sollschlupf-Korridor in Form der Soll-Schlupfwerte

$s_{soll\_min\_HA}$ und $s_{soll\_max\_HA}$ zusammen mit der Fahrzeuglängsgeschwindigkeit $v_x$ als Referenzgeschwindigkeit an die Antriebssteuereinheit 3 direkt übermittelt. Die Antriebssteuereinheit 3 berechnet daraus ihrerseits unter Kenntnis des dynamischen Radradius die jeweils erforderliche Soll-Drehzahl N_min für den Schubbetrieb und N_max für den Zugbetrieb:

$$N\_min = v_x \times (1 - s_{soll\_min\_HA})$$

$$N\_max = v_x \times (1 + s_{soll\_max\_HA})$$

Weiterhin wird von der Antriebssteuereinheit 3 die Istdrehzahl $N_{M\_ist}$ des Antriebsmotors 4 erfasst. In einem entsprechend programmierten Drehzahlregel-Modul NR1 wird dann die Drehzahldifferenz $dN_M$ zwischen der Istdrehzahl $N_{M\_ist}$ und einer außerhalb des durch die beiden Motor-Drehzahlschwellen ($N_{max}/N_{min}$) gebildeten Drehzahlbandes ausgeregelt; also bei einer Istdrehzahl $N_{M\_ist} > N_{max}$ oder $< N_{min}$.

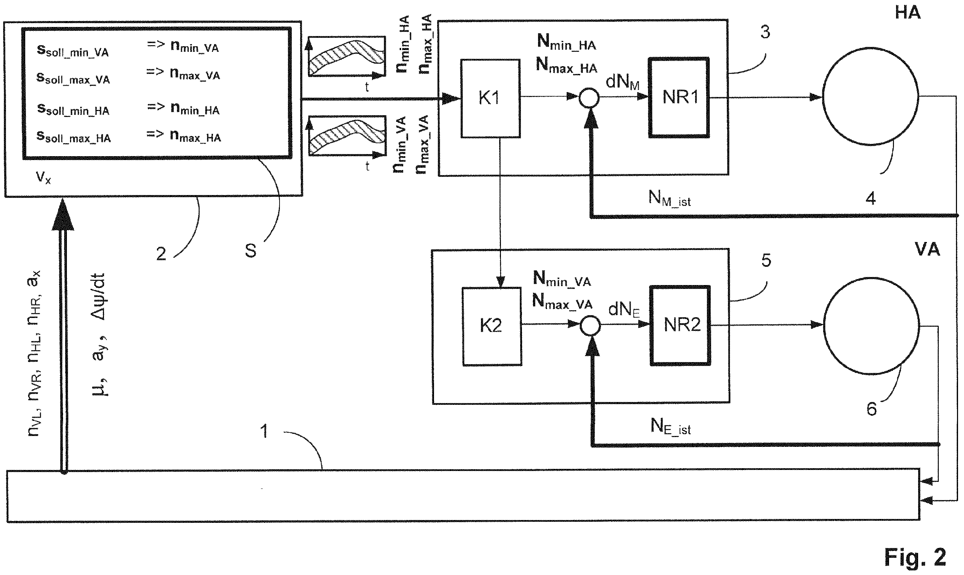

In Fig. 2 ist ein nicht erfindungsgemässes Ausführungsbeispiel dargestellt, bei dem eine erste Antriebssteuereinheit 3 zur Steuerung eines Verbrennungsmotors 4 zum Antrieb einer ersten Achse HA (z.B. Hinterachse) und eine zweite Antriebssteuereinheit 5 zur Steuerung einer E-Maschine 6 zum Antrieb einer zweiten Achse VA (z.B. Vorderachse) vorgesehen ist.

Zur grundsätzlichen Funktionsweise der Antriebssteuereinheiten 3 und 5 wird auf die Ausführungen zur Antriebssteuereinheit 3 gemäß Fig. 1 verwiesen. Zunächst werden also in der Fahrdynamiksteuereinheit 2 minimale und maximale Soll-Schlupfwerte $s_{soll\_min}$ und $s_{soll\_max}$ hier sowohl für die Hinterachse HA als auch für die Vorderachse VA ermittelt. Im Unterschied zum Ausführungsbeispiel nach Fig. 1 wird hier von der Fahrdynamiksteuereinheit 2 basierend auf diesen Sollschlupfwerten und der ermittelten Fahrzeugreferenzgeschwindigkeit $v_x$ eine minimal zulässige Drehzahlschwelle $n_{min\_HA}$ und eine maximal zulässige Drehzahlschwelle $n_{max\_HA}$ für die erste Achse HA sowie eine minimal zulässige Drehzahlschwelle $n_{min\_VA}$ und eine maximal zulässige Drehzahlschwelle $n_{max\_VA}$ für die zweite Achse VA bestimmt und an die erste und/oder zweite Antriebssteuereinheit 3 und/oder 5 ausgegeben.

Die in diesem Fall so bestimmten Soll-Drehzahl-Korridore werden von der Fahrdynamiksteuereinheit 2 an die Antriebssteuereinheit 3 übermittelt. Die Antriebssteuereinheit 3 ist insbesondere ebenfalls durch entsprechende Programmierung eines Funktionsmoduls, z. B. Koordinationsmodul K1, derart ausgestaltet, dass die minimal zulässige Drehzahlschwelle $n_{min}$ und die maximal zulässige Drehzahlschwelle nmax auf Radebene jeweils in eine minimal zulässige Drehzahlschwelle $N_{min}$ und eine maximal zulässige Drehzahlschwelle $N_{max}$ auf Antriebsmotorebene umgerechnet wird, sofern die Fahrdynamiksteuereinheit 2 diese Drehzahlwerte nicht schon selbst auf Motorebene vorgibt.

In diesem Beispiel werden alle Werte nur an die Antriebssteuereinheit 3 ausgegeben, die ihrerseits die minimal zulässige Drehzahlschwelle $n_{min\_HA}$ und die maximal zulässige Drehzahlschwelle $n_{max\_HA}$ für die Hinterachse HA selbst verarbeitet sowie die minimal zulässige Drehzahlschwelle $n_{min\_VA}$ und die maximal zulässige Drehzahlschwelle $n_{max\_VA}$ für die Vorderachse VA an die Antriebssteuereinheit 5 zur weiteren Verarbeitung weiterleitet. Die Drehzahlregelungen werden daraufhin für jede Achse HA und VA getrennt jeweils von den Drehzahlregelmodulen NR1 und NR2 der beiden Antriebssteuereinheiten 3 und 5 analog der Vorgehensweise gemäß dem ersten Ausführungsbeispiel vorgenommen.

Es wurde erkannt, dass erstens die Drehzahl und/oder der Schlupf als Sollwert anstelle des Moments als Sollwert zu einer schnelleren Ausregelung einer Schlupfabweichung führt und dass zweitens auch die Verwendung eines Soll-Korridors anstelle eines Soll-Wertes den Komfort spürbar erhöht.

Besonders vorteilhaft ist eine Weiterbildung der Erfindung für Allradfahrzeuge, wonach bei Allrad-Antrieben eine Differenzschlupfregelung durchgeführt wird, bei der die Sollwertvorgabe einer Achse (z.B. der Vorderachse) eine Funktion des Istwerts der anderen Achse (z.B. der Hinterachse) ist. Im Anwendungsbeispiel gemäß Fig. 2 ergibt sich der Soll-Schlupf der Vorderachse aus dem gemessenen Ist-Schlupf der Hinterachse plus einem Differenzschlupf-Faktor, der in Abhängigkeit der Fahrsituation empirisch ausgeprägt werden kann. Durch den Differenzschlupf-Faktor lässt sich ein definiertes Allrad-Fahrverhalten vergleichbar einer Mischbereifung mit unterschiedlichen Radradien an Vorder- und Hinterachse ausprägen. Dieser Mischbereifungsansatz wirkt sich in Testfahrten sehr positiv auf Fahrbarkeit und Reproduzierbarkeit aus. Mit dem oben beschriebenen Regelansatz lässt sich dieses Fahrverhalten nun unabhängig von der Bereifung darstellen.

**Patentansprüche**

1. Fahrdynamikregelsystem in einem Kraftfahrzeug (1) mit einer elektronischen Fahrdynamiksteuereinheit (2), die mit mindestens einer Antriebssteuereinheit (4; 5) verbunden und derart ausgestaltet ist, dass sie mindestens einen Soll-Schlupf ($s_{soll}$) oder einen Soll-Schlupf-Korridor ($s_{soll\_max\_HA}$, $s_{soll\_min\_HA}$, $s_{soll\_max\_VA}$, $s_{soll\_min\_VA}$) sowie die tatsächliche Fahrzeuggeschwindigkeit ($v_x$) als Referenzgeschwindigkeit ermittelt und dass sie diesen mindestens einen Soll-Schlupf ($s_{soll}$) oder diesen Soll-Schlupf-Korridor ($s_{soll\_max\_HA}$, $s_{soll\_min\_HA}$; $s_{soll\_max\_VA}$, $s_{soll\_min\_VA}$) zusammen mit der Referenzgeschwindigkeit ($v_x$) an die mindestens eine Antriebssteuereinheit (3; 5) überträgt, die ihrerseits durch ein Funktionsmodul (NR1; NR2) entsprechend den übertragenen Werten Soll-Drehzahlwerte ($N_{min\_HA}$, $N_{max\_HA}$; $N_{max\_VA}$, $N_{min\_VA}$) auf Motorebene ermittelt und eine Drehzahlregelung vornimmt.

2. Fahrdynamikregelsystem nach einem der vorangegangenen Patentansprüche, **dadurch gekennzeichnet, dass** der Soll-Schlupf-Korridor ($s_{soll\_max\_HA}$, $s_{soll\_min\_HA}$, $s_{soll\_max\_VA}$, $s_{soll\_min\_VA}$) vorzugsweise durch einen minimal zulässigen Soll-Schlupf ($s_{soll\_min\_HA}$; $s_{soll\_min\_VA}$) für den Schubbetrieb und durch einen maximal zulässigen Soll-Schlupf ($s_{soll\_min\_HA}$; $s_{soll\_min\_VA}$) für den Zugbetrieb vorgegeben wird und/oder dass der Soll-Drehzahl-Korridor ($n_{min\_HA}$, $n_{max\_HA}$; $n_{max\_VA}$, $n_{min\_VA}$) durch eine minimal zulässige Drehzahlschwelle ($n_{min\_HA}$; $n_{min\_VA}$) für den Schubbetrieb und durch eine maximal zulässige Drehzahlschwelle ($n_{max\_HA}$; $n_{max\_VA}$) für den Zugbetrieb vorgegeben wird.

3. Fahrdynamikregelsystem nach einem der vorangegangenen Patentansprüche, **dadurch gekennzeichnet, dass** eine erste Antriebssteuereinheit (3) zur Steuerung eines ersten Antriebsmotors (4) zum Antrieb einer ersten Achse (HA) und eine zweite Antriebssteuereinheit (5) zur Steuerung eines zweiten Antriebsmotors (6) zum Antrieb einer zweiten Achse (VA) vorgesehen sind und dass von der Fahrdynamiksteuereinheit (2) eine minimal zulässige Drehzahlschwelle ($n_{min\_HA}$) und/oder ein minimal zulässiger Soll-Schlupf ($s_{soll\_min\_HA}$) und eine maximal zulässige Drehzahlschwelle ($n_{max\_HA}$) und/oder ein maximal zulässiger Soll-Schlupf ($s_{soll\_min\_HA}$) für die erste Achse (HA) und eine minimal zulässige Drehzahlschwelle ($n_{min\_VA}$) und/oder ein minimal zulässiger Soll-Schlupf ($s_{soll\_min\_VA}$) und eine maximal zulässige Drehzahlschwelle ($n_{max\_VA}$) und/oder ein maximal zulässiger Soll-Schlupf ($s_{soll\_min\_VA}$) für die zweite Achse (VA) bestimmbar und an die erste und/oder zweite Antriebssteuereinheit (3, 5) ausgebbar sind.

4. Fahrdynamikregelsystem nach einem der vorangegangenen Patentansprüche, **dadurch gekennzeichnet, dass** bei Allrad-Antrieben eine Differenzschlupfregelung durchgeführt wird, bei der der Soll-Schlupfwert für eine Achse als Funktion des Ist-Schlupfwertes der anderen Achse vorgegeben wird.

5. Elektronische Fahrdynamiksteuereinheit (2) für ein Fahrdynamikregelsystem nach einem der vorangegangenen Patentansprüchen mit einem Funktionsmodul zur Bestimmung mindestens eines rad- oder achsbezogenen minimal zulässigen Soll-Schlupfes ($s_{soll\_min\_HA}$; $s_{soll\_min\_VA}$) sowie mindestens eines rad- oder achsbezogenen maximal zulässigen Soll-Schlupfes ($s_{soll\_min\_HA}$; und zur Übertragung dieser bestimmten Werte an mindestens eine Antriebseinheit (3; 3, 5), um diese ihrerseits abhängig von diesen übertragenen Werten zu einer Drehzahlregelung zu befähigen.

## Claims

1. Vehicle dynamics control system in a motor vehicle (1) having an electronic vehicle dynamics control unit (2) which is connected to at least one drive control unit (4; 5) and is configured in such a way that it determines at least one setpoint slip ($s_{setp}$) or a setpoint slip corridor ($s_{setp\_max\_HA}$, $s_{setp\_min\_HA}$, $s_{setp\_max\_VA}$, $s_{setp\_min\_VA}$) and the actual vehicle speed ($v_x$) as a reference speed, and that it transmits this at least one setpoint slip ($s_{setp}$) or this setpoint slip corridor ($s_{setp\_max\_HA}$, $s_{setp\_min\_HA}$, $s_{setp\_min\_VA}$; $s_{setp\_min\_VA}$) together with the reference speed ($v_x$) to the at least one drive control unit (3; 5) which itself, in accordance with the transmitted values and by means of a function module (NR1; NR2), determines setpoint rotational speed values ($N_{min\_HA}$, $N_{max\_HA}$; $N_{max\_VA}$, $N_{min\_VA}$) at the motor level and carries out a rotational speed control process.

2. Vehicle dynamics control system according to one of the preceding patent claims, **characterized in that** the setpoint slip corridor ($s_{setp\_max\_HA}$, $s_{setp\_min\_HA}$, $s_{setp\_max\_VA}$, $s_{setp\_min\_VA}$) is preferably predefined by a minimum permissible setpoint slip ($s_{setp\_min\_HA}$; $s_{setp\_min\_VA}$) for the overrun mode and by a maximum permissible setpoint slip ($s_{setp\_max\_HA}$; $s_{setp\_max\_VA}$) for the traction mode, and/or **in that** the setpoint rotational speed corridor ($n_{min\_HA}$, $n_{max\_HA}$; $n_{max\_VA}$, $n_{min\_VA}$) is preferably predefined by a minimum permissible rotational speed threshold ($n_{min\_HA}$; $n_{min\_VA}$) for the overrun mode and by a maximum permissible rotational speed threshold ($n_{max\_HA}$; $n_{max\_VA}$) for the traction mode.

3. Vehicle dynamics control system according to one of the preceding patent claims, **characterized in that** a first drive control unit (3) is provided for controlling a first drive motor (4) for driving a first axle (HA), and a second drive control unit (5) is provided for controlling a second drive motor (6) for driving a second axle (VA), and **in that** the vehicle dynamics control unit (2) can determine a minimum permissible rotational speed threshold ($n_{min\_HA}$) and/or a minimum permissible setpoint slip ($s_{setp\_min\_HA}$) and a maximum permissible rotational speed threshold ($n_{max\_HA}$) and/or a maximum permissible setpoint slip ($s_{setp\_max\_HA}$) for the first axle (HA), and a minimum permissible rotational speed threshold ($n_{min\_VA}$) and/or a minimum permissible setpoint slip ($s_{setp\_min\_VA}$) and a maximum permissible rotational speed threshold ($n_{max\_VA}$) and/or a maximum permissible setpoint slip ($s_{setp\_max\_VA}$) for the second axle (VA), and can output these to the first and/or second drive control unit (3, 5).

4. Vehicle dynamics control system according to one of the preceding patent claims, **characterized in that** in the case of all-wheel drives a differential slip control process is carried out in which the setpoint slip value for one axle is predefined as a function of the actual slip value of the other axle.

5. Electronic vehicle dynamics control unit (2) for a vehicle dynamics control system according to one of the preceding patent claims having a function module for determining at least one wheel-related or axle-related minimum permissible setpoint slip ($s_{setp\_min\_HA}$; $s_{setp\_min\_VA}$) and at least one wheel-related or axle-related maximum permissible setpoint slip ($s_{setp\_min\_HA}$;
and for transmitting these determined values to at least one drive unit (3; 3, 5) in order to enable the latter to perform a rotational speed control process itself as a function of these transmitted values.

## Revendications

1. Système de régulation de la dynamique de conduite dans un véhicule automobile (1), comprenant une unité de commande électronique de la dynamique de conduite (2) qui est reliée à au moins une unité de commande d'entraînement (4 ; 5) et configurée de telle sorte qu'elle établit au moins un glissement de consigne ($S_{soll}$) ou une plage de glissement de consigne ($S_{soll\_max\_HA}$, $S_{soll\_min\_HA}$, $S_{soll\_max\_VA}$, $S_{soll\_min\_VA}$) ainsi que la vitesse de véhicule réelle ($v_x$) en tant que vitesse de référence, et qu'elle transmet cet au moins un glissement de consigne ($S_{soll}$) ou cette plage de glissement de consigne ($S_{soll\_max\_HA}$, $S_{soll\_min\_HA}$ ; $S_{soll\_max\_VA}$, $S_{soll\_min\_VA}$) conjointement avec la vitesse de référence ($v_x$) à ladite au moins une unité de commande d'entraînement (3 ; 5) qui établit à son tour par un module de fonction (NR1 ; NR2), selon les valeurs transmises, des valeurs de vitesse de rotation de consigne ($N_{min\_HA}$, $N_{max\_HA}$ ; $N_{max\_VA}$, $N_{min\_VA}$) au niveau du moteur et procède à une régulation de vitesse de rotation.

2. Système de régulation de la dynamique de conduite selon l'une quelconque des revendications précédentes, **caractérisé en ce que** la plage de glissement de consigne ($S_{soll\_max\_HA}$, $S_{soll\_min\_HA}$, $S_{soll\_max\_VA}$, $S_{soll\_min\_VA}$) est de préférence spécifiée par un glissement de consigne admissible minimal ($S_{soll\_min\_HA}$ ; $S_{soll\_min\_VA}$) pour le mode de poussée et par un glissement de consigne admissible maximal ($S_{soll\_max\_HA}$ ; $S_{soll\_max\_VA}$) pour le mode de traction, et/ou **en ce que** la plage de vitesse de rotation de consigne ($n_{min\_HA}$, $n_{max\_HA}$ ; $n_{max\_VA}$, $n_{min\_VA}$) est spécifiée par un seuil de vitesse de rotation admissible minimal ($n_{min\_HA}$ ; $n_{min\_VA}$) pour le mode de poussée et par un seuil de vitesse de rotation admissible maximal ($n_{max\_HA}$ ; $n_{max\_VA}$) pour le mode de traction.

3. Système de régulation de la dynamique de conduite selon l'une quelconque des revendications précédentes, **caractérisé en ce qu'**une première unité de commande d'entraînement (3) est prévue pour commander un premier moteur d'entraînement (4) afin d'entraîner un premier essieu (HA) et une deuxième unité de commande d'entraînement (5) est prévue pour commander un deuxième moteur d'entraînement (6) afin d'entraîner un deuxième essieu (VA), et **en ce que** l'unité de commande de la dynamique de conduite (2) permet de déterminer un seuil de vitesse de rotation admissible minimal ($n_{min\_HA}$) et/ou un glissement de consigne admissible minimal ($S_{soll\_min\_HA}$) et un seuil de vitesse de rotation admissible maximal ($n_{max\_HA}$) et/ou un glissement de consigne admissible maximal ($S_{soll\_max\_HA}$) pour le premier essieu (HA) et un seuil de vitesse de rotation admissible minimal ($n_{min\_VA}$) et/ou un glissement de consigne admissible minimal ($S_{soll\_min\_VA}$) et un seuil de vitesse de rotation admissible maximal ($n_{max\_VA}$) et/ou un glissement de consigne admissible maximal ($S_{soll\_max\_VA}$) pour le deuxième essieu (VA) et de les délivrer à la première et/ou à la deuxième unité de commande d'entraînement (3, 5).

4. Système de régulation de la dynamique de conduite selon l'une quelconque des revendications précédentes, **caractérisé en ce que** pour des tractions intégrales, une régulation de glissement différentielle est effectuée lors de laquelle la valeur de glissement de consigne pour un essieu est spécifiée comme une fonction de la valeur de glissement réelle de l'autre essieu.

5. Unité de commande électronique de la dynamique de conduite (2) pour un système de régulation de la dynamique de conduite selon l'une quelconque des revendications précédentes, comprenant un module de fonction pour déterminer au moins un glissement de consigne admissible minimal ($S_{soll\_min\_HA}$ ; $S_{soll\_min\_VA}$) relatif à une roue ou à un essieu, ainsi qu'au moins un glissement de consigne admissible maximal ($S_{soll\_max\_HA}$ ; relatif à une roue ou à un essieu, et pour transmettre ces valeurs déterminées à au moins une unité d'entraînement (3 ; 3, 5) afin de permettre à celle-ci de procéder à son tour à une régulation de la vitesse de rotation en fonction de ces valeurs transmises.

HA

Fig. 1

$N_{M\_ist}$

NR1

3

$dN_M$

$<N_{min}$ /
$>N_{max}$

K1

4

$S_{soll\_max\_HA}$
$S_{soll\_min\_HA}$

$v_x$

t

S

$S_{soll\_min\_HA}$
$S_{soll\_max\_HA}$

$v_x$

2

1

$\mu$, $a_y$, $\Delta\psi/dt$

$n_{VL}$, $n_{VR}$, $n_{HL}$, $n_{HR}$, $a_x$

Fig. 2

Fig. 3 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006007740 A1
- DE 102010014971 A1
- DE 102010061918 A1
- DE 102004057834 A1